# EUROPÄISCHE PATENTSCHRIFT

(11) **EP 0 525 419 B1**
(45) Veröffentlichungstag und Bekanntmachung des Hinweises auf die Patenterteilung: **21.02.1996**
(21) Anmeldenummer: 92111115.9
(22) Anmeldetag: 01.07.1992
(51) Int. Cl.: F02D 11/10

(54) **Einrichtung zur Steuerung der Ausgangsleistung einer Antriebseinheit eines Fahrzeugs**
Device for controlling the output power of a vehicular power unit
Dispositif pour commander la puissance de sortie d'une unité matrice de véhicule

(30) Priorität: 02.08.1991 DE 4125574; 02.04.1992 DE 4210956
(43) Veröffentlichungstag der Anmeldung: 03.02.1993
(73) Patentinhaber: ROBERT BOSCH GMBH, D-70442 Stuttgart (DE)
(72) Erfinder: Streib, Martin, W-7143 Vaihingen/Enz 6 (DE); Zhang, Hong, W-7120 Bietigheim-Bissingen (DE)

(56) Entgegenhaltungen:
- EP-A- 0 413 031
- DE-A- 3 843 060
- US-A- 4 881 428
- PATENT ABSTRACTS OF JAPAN vol. 011, no. 067 (M-566)28. Februar 1987

## Beschreibung

### Stand der Technik

Die Erfindung betrifft eine Einrichtung zur Steuerung der Ausgangsleistung einer Antriebseinheit eines Fahrzeugs wie im Patentanspruch 1 beschrieben.

Eine derartige Einrichtung ist beispielsweise aus der nicht vorveröffentlichten deutschen Patentanmeldung P 40 37 237.5 bekannt. Dort wird zur Steuerung der Ausgangsleistung einer Antriebseinheit ein Antriebsmomentsollwert entsprechend dem Fahrerwunsch vorgegeben und unter Vorgabe eines Motormomentsollwerts das Motormoment durch Beeinflussung von Leistungsparametern des Motors unter Berücksichtigung von Getriebeübersetzungen entsprechend dem Sollwert des Abtriebsmoments eingestellt. Der Motormomentsollwert wird dabei auf der Basis von Getriebeübersetzung, Abtriebsmomentsollwert und gemessener Abtriebsdrehzahl aus einem Kennfeld ermittelt. Die Berechnung des Sollmotormoments erfolgt dabei derart, daß das sich einstellende Abtriebsmoment unabhängig vom eingelegten Gang entsprechend der Fahrpedalstellung zur Verfügung gestellt wird.

Bei einem automatischen Getriebe mit Wandler ergibt sich die folgende Situation. Der Sollwert des Abtriebsmoments, ermittelt aus Abtriebsdrehzahl und Fahrpedalstellung, erfordert ein gewisses Solldrehmoment am Turbinenrad des Wandlers abhängig von der Übersetzung des eingelegten Ganges. Um dieses Sollturbinenmoment zu erreichen, ist je nach Wandlerverstärkung ein bestimmtes Sollmotormoment am Wandlereingang erforderlich. Um ein von der Gangstellung und Wandlerverstärkung unabhängiges Abtriebsmoment zu erreichen, muß somit bei der Bestimmung des Sollmotormoments die Wandlerverstärkung mit einbezogen werden. Eine konkrete Vorgehensweise zur Bestimmung der Wandlerverstärkung ist dieser Patentanmeldung nicht zu entnehmen.

Bei elektronischen Getriebesteuerungen ist bekannt, aus Motormoment, Gangstellung und Wandlerschlupf, welcher direkt mit der Wandlerverstärkung zusammenhängt, eine theoretische Sollbeschleunigung des Fahrzeuges zu berechnen. Der Schlupf des Wandlers kann dabei aus einem Kennfeld als Funktion von Motordrehzahl und Motormoment bestimmt werden.

Die Verwendung einer derartigen Methode zur Bestimmung des Wandlerschlupfes bzw. der daraus resultierenden Wandlerverstärkung ist jedoch dann nicht geeignet, wenn das Motormoment unbekannt ist oder wenn ein Sollwert für das Motormoment im voraus berechnet werden muß, um ein vorgegebenes Abtriebsmoment zu erreichen. Daher kann mit dieser Vorgehensweise das notwendige Motormoment nicht in allen Fällen auf zufriedenstellende Weise mit Blick auf den den Fahrerwunsch repräsentierenden Sollabtriebsmomentwert bereitgestellt werden. Eine exakte Bestimmung des Sollmotormoments nach der oben skizzierten Methode hätte ferner einen iterativen Berechungsgang mit entsprechendem Aufwand zur Folge, da der Wandlerschlupf bzw. die Wandlerverstärkung vom Motormoment, einer gesuchten Größe, abhängig sind.

Der Erfindung liegt daher die Aufgabe zugrunde, bei einer Einrichtung zur Steuerung der Ausgangsleistung einer Antriebseinheit eines Fahrzeugs bezüglich der Bereitstellung des Motormoments Verbesserungen anzugeben.

Dies wird durch die Merkmale des unabhängigen Patentanspruchs erreicht.

Die EP 413 031 A1 beschreibt, das Motormoment Teo auf der Basis des von Fahrer vorgegebenen Sollabtriebsmoments Twt, der Getriebeübersetzung ρ sowie des Drehmomentenverhältnisses τ des Drehmomentenwandlers zu bestimmen. Das Drehmomentenverhältnis τ ist dabei abhängig von dem Verhältnis der Drehzahlen der Kurbelwelle des Motors und der Turbine des Drehmomentenwandlers. Das Motormoment wird demnach auf der Basis der aktuellen Daten im Antriebsstrang bestimmt. Der bei der Einstellung des Motormoments auftretende Zustand des Antriebstranges wird bei der Berechnung des Motormoments nicht berücksichtigt

Dies wird dadurch erreicht, daß die Bestimmung des Sollwertes für das bereitzustellende Motormoment auf der Basis von wenigstens eines Sollwertes einer Betriebsgröße der Antriebseinheit erfolgt, wobei der Wert dieses Sollwerts ein Maß für den Wert darstellt, der sich als Folge der Einstellung des Sollwerts des Abtriebsmoments ergeben wird.

### Vorteile der Erfindung

Die erfindungsgemäße Vorgehensweise hat den Vorteil, daß der Sollwert für das Motormoment unter Berücksichtigung der Wandlerverstärkung auf einfache Weise berechnet werden kann.

Als ein wesentlicher Vorteil stellt sich dar, daß man zum Zeitpunkt der Berechnung des erforderlichen Motormoments dieses schon auf der Basis der sich bei dem berechneten Motormoment einstellenden Wandlerverstärkung vornimmt.

Damit können die leistungsbestimmenden Parameter des Motors an die zukünftigen Erfordernisse angepaßt entsprechend dem Fahrerwunsch eingestellt werden. Dies ermöglicht eine genaue Bereitstellung des dem Fahrerwunsch entsprechenden Abtriebssollmoment.

Die erfindungsgemäße Vorgehensweise erlaubt eine direkte Berechnung des gesuchten Motormomentssollwerts, ohne iterative Berechnungsschritte und rechenintensiven Aufwand.

Insbesondere ist die Verwendung von Turbinendrehzahl und Turbinenmoment-Sollwert des Wandlers oder diese repräsentierenden Größen zur Berechnung der Wandlerverstärkung vorteilhaft.

In anderen Ausführungsbeispielen ist alternativ vorteilhaft, die Berechnung der Wandlerverstärkung aufgrund einer Interpolation aus einer Kennlinie, welche die Wandlerverstärkung als Funktion des Quotienten aus Turbinendrehzahl und Motordrehzahl zeigt, vorzunehmen. Durch diese Alternative wird die Berechnung der Wandlerverstärkung nicht durch ein zweidimensionales Kennfeld, sondern durch eine eindimensionale Kennlinie durchgeführt, ohne daß an der Genauigkeit Abstriche zu machen sind. Ferner erlaubt diese Vorgehensweise, die aktuellen Meßwerte der Turbinendrehzahl und der Motordrehzahl zum Zeitpunkt der Berechnung zu erfassen, so daß die berechnete Wandlerverstärkung genau der momentanen Verstärkung der Wandlers entspricht. Dadurch wird zusätzlich bei der Berechnung des erforderlichen Motormoments die Dynamik des Wandlers berücksichtigt.

Weitere Vorteile ergeben sich aus der nachfolgenden Beschreibung von Ausführungsbeispielen sowie den Unteransprüchen.

### Zeichnung

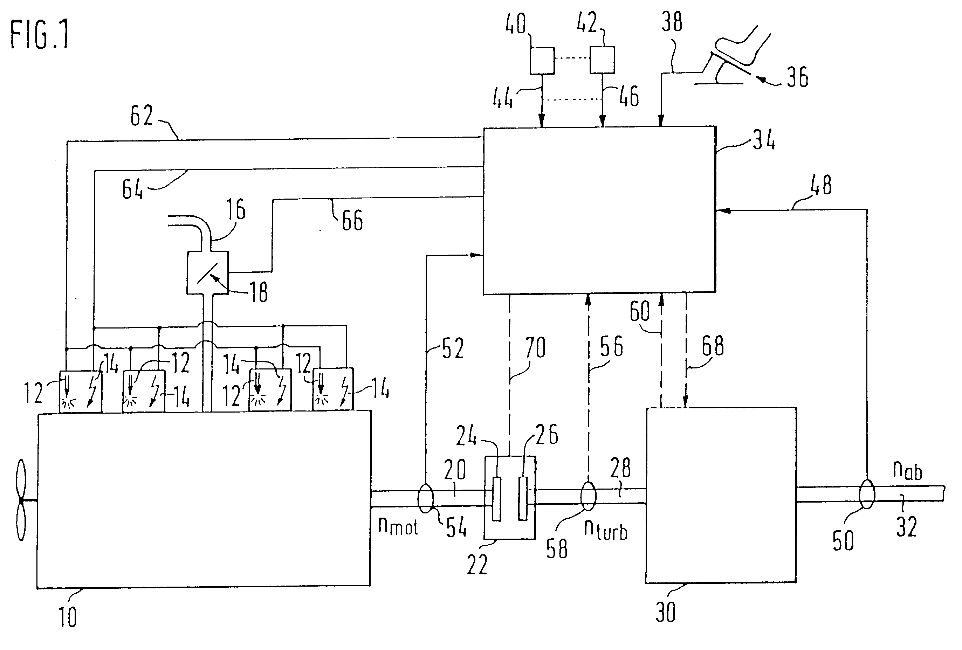

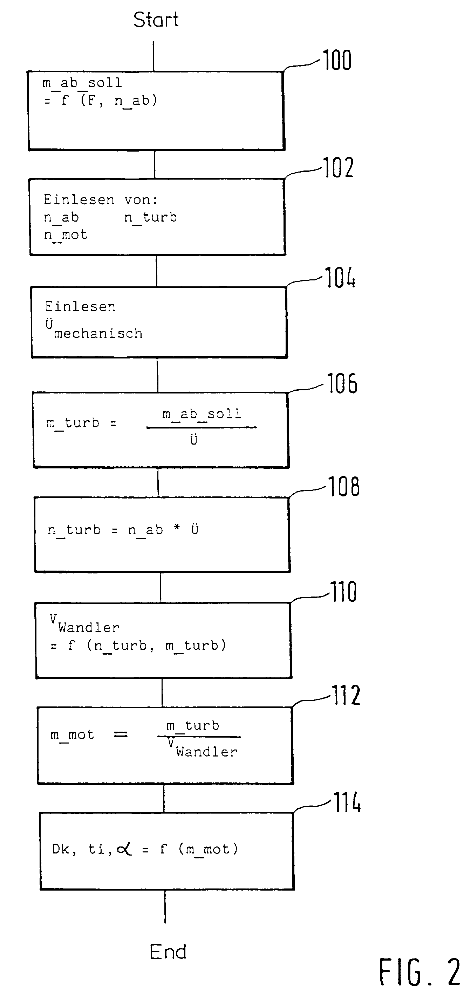

Die Erfindung wird nachstehend anhand der in der Zeichnung dargestellten Ausführungsformen erläutert. Dabei zeigt Figur 1 ein Übersichtsblockschaltbild einer Einrichtung zur Steuerung der Ausgangsleistung einer Antriebseinheit eines Fahrzeugs, während Figur 2 ein Flußdiagramm zeigt, welches die Bestimmung und Einstellung des Motormoments nach der erfindungsgemäßen Vorgehensweise darstellt.

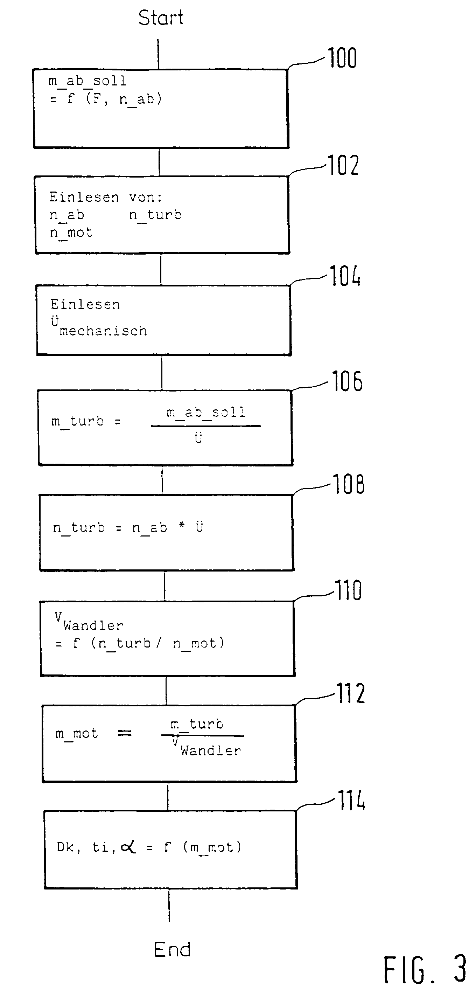

Figur 3 zeigt ein weiteres Ausführungsbeispiel der erfindungsgemäßen Vorgehensweise.

### Beschreibung von Ausführungsbeispielen

Figur 1 zeigt mit 10 eine schematische Darstellung einer mehrzylindrigen Brennkraftmaschine mit steuerbaren Vorrichtungen zur Kraftstoffzumessung und zur Zündung 12 und 14. Ferner ist ein Luftansaugsystem 16 vorgesehen, welches mit einer elektronischen ansteuerbaren Drosselklappe 18 versehen ist. Die Ausgangswelle 20 (Kurbelwelle) der Brennkraftmaschine 10 verbindet die Brennkaftmaschine 10 mit einem Wandler 22, dort mit dem Pumpenrad 24. Das Turbinenrad 26 des Wandlers 22 ist mit der Welle 28 verbunden, welche auf das Getriebe 30 geführt ist. Die Ausgangswelle 32 des Getriebes 30 stellt den eigentlichen Antrieb des Fahrzeugs dar. Bei den bezeichneten Wellen kann es sich in anderen Ausführungsbeispielen um Wellensysteme handeln. Getriebe 30, Wandler 22 und die Wellen 20, 28 und 32 bilden die Kraftübertragungseinheit des Fahrzeugs.

Ferner ist zur Durchführung von Steuerungsaufgaben eine Steuereinheit 34 vorgesehen, wobei diese Steuereinheit in Form eines zentralen Steuergeräts oder mehrerer vernetzter Steuergeräte ausgeführt sein kann. Dieser Steuereinheit werden die folgenden Eingangssignale zugeführt. Von einem vom Fahrer betätigbaren Bedienelement 36 wird über eine Signalleitung 38 ein dem Fahrerwunsch entsprechendes Signal zugeführt. Von Meßeinrichtungen 40 bis 42 werden über Verbindungsleitungen 44 bis 46 Betriebsgrößen von Brennkraftmaschine und Kraftfahrzeug, wie z. B. Motortemperatur, Fahrgeschwindigkeit, etc. zugeführt. Eine Eingangsleitung 48 verbindet die Steuereinheit 34 mit einer die Abtriebsdrehzahl des Getriebes erfassenden Meßeinrichtung 50.

Alternativ können auch Meßeinrichtungen zur Erfassung von die Abtriebsdrehzahl repräsentierenden Größen, z.B. Raddrehzahlen, vorgesehen sein, die ihre Meßgrößen über die Leitung 48 an die Steuereinheit 34 abgeben. Eine Verbindungsleitung 52 verbindet die Steuereinheit 34 mit einem die Motordrehzahl oder eine diese repräsentierende Meßgröße im Bereich der Ausgangswelle 20 erfassenden Meßeinrichtung 54. In manchen Ausführungsbeispielen kann zusätzlich vorteilhafterweise eine Eingangsleitung 56 vorgesehen sein, welche die Steuereinheit 34 mit einer Meßeinheit 58 zur Erfassung der Turbinendrehzahl des Wandlers 22 oder einer diese repräsentierenden Größe im Bereich der Welle 28 verbindet. Eine weitere Verbindungsleitung 60 kann vom Getriebe 30 die aktuell eingelegte bzw. eingestellte Gangübersetzung und den Status der Wandlerkupplung an die Steuereinheit 34 melden.

Abhängig von den zugeführten Größen bildet die Steuereinheit 34 entsprechend ihrer Programme Steuerbefehle für die steuerbaren Kenngrößen der Antriebseinheit, wie Motorleistung (z. B. Kraftstoffzumessung, Zündzeitpunkt und/oder Drosselklappenstellung), Getriebeübersetzung oder Wandlerkupplungszustand. Steuersignale zur Steuerung der Motorleistung werden dabei je nach Ausführungsbeispiel über die Verbindungsleitungen 62, 64 und 66 an die entsprechend steuerbaren Vorrichtungen abgegeben, während Getriebesteuersignale und Wandlerkupplungssteuersignale, sofern eine Wandlerkupplung vorhanden ist, über die Verbindungsleitungen 68 und 70 zu Getriebe 30 und Wandler 22 geführt sind.

Die nachfolgenden Ausführungen sind neben der im Ausführungsbeispiel genannten Ausführung einer Brennkraftmaschine mit automatisch steuerbarem Getriebe, Wandler und Wandlerkupplung auch auf verschiedene Arten von Kraftübertragungseinheiten, steuerbare, teilweise steuerbare oder nicht steuerbare, anzuwenden.

Insbesondere eignet sich die erfindungsgemäße Vorgehensweise auch in Verbindung mit alternativen Antriebskonzepten, z.B. Elektromotoren, wobei das Motormoment bzw. die Motorleistung dann über die entsprechenden Parameter einzustellen ist.

Anhand des vom Bedienelement 36 erfaßten Fahrerwunsches bildet die Steuereinheit 34 unter Berücksichtigung der von der Meßeinheit 50 erfaßten Abtriebsdrehzahl der Antriebseinheit (alternativ Raddrehzahlen, Fahrgeschwindigkeit) ein Abtriebssollmoment, welches an der Welle 32 durch die Antriebseinheit zur Erfüllung des Fahrerwunsches bereitzustellen ist. Dieses Abtriebssollmoment wird von der Steuereinheit in bekannter Weise in eine optimale Getriebeübersetzung und ein Sollmotormoment umgesetzt. Das Motormoment wird auf der Basis der erfaßten Betriebsgrößen durch Einstellung der Kraftstoffzumessung bei Dieselmotoren und der Luftzumessung bei Otto-Motoren und/oder ggf. des Zündzeitpunktes an der Kurbelwelle 20 des Motors bereitgestellt, so daß zusammen mit der eingestellten Übersetzung das Sollabtriebsmoment an der Abtriebswelle 32 der Antriebseinheit zur Verfügung steht.

Bei der Berechnung des Sollmotormoments aus dem Sollabtriebsmoments treten die oben skizzierten Problemstellungen auf. Das zur Bereitstellung des Abtriebmoment-Sollwertes erforderliche Motormoment muß bereits die sich als Folge dieses zu berechnenden Motormoments einzustellende Wandlerverstärkung des Wandlers 22 berücksichtigen, wobei die Wandlerverstärkung selbst vom Motormoment abhängig ist. Je nach Wandlerverstärkung ist an der Kurbelwelle 20 ein Motormoment erforderlich, das gegenüber dem an der Eingangswelle des Getriebes auftretenden Turbinenmoment ein mit dem Faktor der Wandlerverstärkung gewichtetes Motormoment erforderlich. Um eine zufriedenstellende Steuerung der Antriebseinheit zu gewährleisten, muß dabei eine Wandlerverstärkung berücksichtigt werden, die sich unter den gegebenen Bedingungen einstellen wird, wenn das Abtriebsmoment seinen Sollwert erreicht hat.

Bei der Ermittlung und Bereitstellung des Sollmotormoments wird dabei wie anhand Figur 2 dargestellt vorgegangen. Die dort angegeben Meßgrößen werden vorteilhaft in einem Ausführungsbeispiel verwendet. In anderen Ausführungen kann die Verwendung von anderen, mit den unten bezeichneten Größen in festem Zusammenhang stehenden Größen zweckmäßig sein.

Nach Start des zyklisch aufgerufenen Programmteils wird in einem ersten Schritt 100 ein Abtriebssollmoment m_ab_soll auf der Basis des Fahrerwunsches F unter Berücksichtigung der Abtriebsdrehzahl n_ab beispielsweise aus einem Kennfeld gebildet. Danach werden im Schritt 102 die zur Verfügung stehenden Drehzahlen eingelesen. Dabei handelt es sich wenigstens um die Abtriebsdrehzahl n_ab der Abtriebswelle 32, der Motordrehzahl n_mot der Motorwelle 20 oder zusätzlich je nach Typ der Kraftübertragungseinheit die Turbinendrehzahl n_turb der Welle 28. Danach wird im Schritt 104 die Getriebeübersetzung Ü des Getriebes 30 eingelesen. Dabei handelt es sich um das Drehzahlübersetzungsverhältnis des Getriebes 30, welches entweder aus fest abgelegten Werten für die einzelnen Gangstufen bestimmt oder durch Quotientenbildung der Ein- und Ausgangsdrehzahlen des Getriebes 30 (n_turb, n_ab) bestimmt wird. Daraufhin folgt im Schritt 106 die Berechnung des Turbinenmomentsollwertes m_turb, der an der Welle 28 unter Berücksichtigung der Getriebeübersetzung auftreten muß, um das Sollabtriebsmoment an der Welle 32 bereitzustellen. Die Berechnung des Turbinensollmoments m_turb wird dabei durch Quotientenbildung aus Abtriebssollmoment m_ab_soll und Getriebeübersetzung Ü durchgeführt.

Sofern eine Kraftübertragungseinheit ohne die Möglichkeit der Erfassung der Turbinendrehzahl n_turb der Welle 28 verwendet wird, wird im Schritt 108 die Turbinendrehzahl n_turb aus dem Produkt von Abtriebsdrehzahl n_ab und Getriebeübersetzung Ü berechnet.

Danach folgt im Schritt 110 die Bestimmung der Wandlerverstärkung V des Wandlers durch eine Kennfeldinterpolation in Abhängigkeit der Turbinendrehzahl n_turb sowie des Sollwertes des Turbinenmoments m_turb. Die ermittelte Wandlerverstärkung V stellt einen Wert in Abhängigkeit des zur Bereitstellung des Sollabtriebsmomentes notwendigen Sollturbinenmomentes sowie der momentanen Turbinendrehzahl dar. Dadurch läßt sich bei der folgenden Berechnung des Sollmotormoments bereits Informationen über die bei der Veränderung der Motorleistung zur Einstellung des Sollmotormoments bzw. -abtriebsmoment zu erwartende Wandlerverstärkung und damit die Motormomentenabhängigkeit der Wandlerverstärkung einbringen.

Das zur Bestimmung der Wandlerverstärkung im Schritt 110 angegebene Kennfeld zeigt die folgende prinzipielle Charakteristik. Die Wandlerverstärkung ist im allgemeinen bei konstantem Turbinenmoment zu niedrigen Turbinendrehzahlen hin betragsmäßig steigend, während sie zu steigenden Drehzahlen hin fällt. Auf der anderen Seite ist für konstante Turbinendrehzahl mit steigendem Turbinenmoment ein steigender Schlupf des Wandlers, d. h. eine steigende Wandlerverstärkung, vorzusehen. Die Wandlerverstärkung steigt demnach bei konstanter Turbinendrehzahl mit steigendem Turbinensollmoment an.

Alternativ zu dem vorstehend beschriebenen kann, wie in Figur 3 dargestellt, in vorteilhafter Weise in anderen Ausführungsbeispielen im Schritt 110 die Wandlerverstärkung aus einer Kennlinieninterpolation gewonnen werden, wobei die Kennlinie die Wandlerverstärkung als Funktion des Quotienten von Turbinendrehzahl und Motordrehzahl darstellt. Dabei wird der Quotient aus der im Schritt 102 erfaßten Turbinendrehzahl und Motordrehzahl gebildet und gemäß bekannter Interpolationsberechnungen die aktuelle Wandlerverstärkung berechnet. Ist der Wandler durch eine möglicherweise vorhandene Wandlerkupplung überbrückt, so wird die Wandlerverstärkung zu eins gesetzt. Der Quotient aus Turbinendrehzahl und Motordrehzahl entspricht im wesentlichen dem Schlupf (Schlupf = 1 - n_turb/n_mot) des Wandlers. Es ist daher besonders vorteilhaft, die Wandlerverstärkung als Funktion dieses Schlupfes zu berechnen. Da die Turbinendrehzahl und die Motordrehzahl zum Zeitpunkt der Berechnung gemessen werden (Schritt 102), entspricht die berechnete Wandlerverstärkung genau der momentanen Verstärkung des Wandlers (Schritt 111). Dadurch wird bei der Berechnung des erforderlichen Motormoments im nachfolgenden Schritt 112 auch die Dynamik des Wandlers berücksichtigt.

Die Kennlinie kannn für jeden Wandlertyp experimentell ermittelt werden, bzw. ist bekannt, wobei die Wandlerverstärkung im wesentlichen mit abnehmenden Schlupf (größer werdenden Quotient) abnimmt.

Im nachfolgenden Schritt 112 wird dann das Sollmotormoment aus Turbinenmoment und Wandlerverstärkung berechnet. Die Berechnung erfolgt durch den Quotienten aus Sollturbinenmoment und Wandlerverstärkung. Im Schritt 114 schließlich wird das Sollmotormoment durch Einstellung der Kraftstoffzumessung (ti) bei Diesel-, der Drosselklappen-Stellung (Dk) bei Ottomotoren und/oder ggf. des Zündzeitpunkts bereitgestellt. Dies erfolgt in diesem Ausführungsbeispiel mittels eines Kennfeldes, indem ein Drosselklappenstellungssollwert (Otto-Motor) als Funktion des Motormoment-Sollwerts, der Motordrehzahl und ggf. weiterer Einflußgrößen wie z. B. Motortemperatur eingetragen ist. Beim Dieselmotor ist der Drosselklappenstellungssollwert durch eine Einspritzmenge ersetzt.

Danach wird der Programmteil beendet und zu gegebener Zeit (ca. alle 10 bis 100 ms) wiederholt. Bei dem erneuten Durchlauf werden die Parameter neu bestimmt, so daß sich fortlaufend eine Steuerung des Motormoments zur Einstellung des Sollabtriebsmoments ergibt.

Für den Fall, daß der Wandler eine betätigbare Wandlerkupplung aufweist, ist bei geschlossener Wandlerkupplung, die eine Überbrückung des Wandlers zur Folge hat, für die Wandlerverstärkung der Wert 1 einzusetzen.

Ferner ist bei Getrieben, die über keine Erfassung der Turbinendrehzahl verfügen, die Berechnung der Turbinendrehzahl im Schritt 108 während eines Gangwechsels nicht möglich, so daß die erfindungsgemäße Vorgehensweise in diesem Fall während des Gangwechsels nicht durchgeführt werden kann. Eine Meßeinrichtung zur Erfassung der Turbinendrehzahl, die ein entsprechendes Signal in die Steuereinheit abgibt, würde jedoch das erfindungsgemäße Verfahren auch während des Gangwechsels erlauben.

Wird das Verfahren während eines Gangwechsels nicht angewendet, so ist für die Zeit des Gangwechsels der Motormomentverlauf so zu steuern, daß ein möglichst guter Übergang zwischen dem Motormoment im alten und dem im neuen Gang erfolgt.

Um mechanische Reibungsverluste im Getriebe zu berücksichtigen, kann für die Berechnung des Sollturbinenmoments gemäß Schritt 106 nicht das Drehzahlübersetzungsverhältnis Ü eingesetzt werden, sondern die effektive Drehmomentübertragung des Getriebes ÜEFF. Dabei ist jedoch zu beachten, daß im Schritt 108 zur Berechnung der Turbinendrehzahl weiterhin das Drehzahlübersetzungsverhältnis Ü einzusetzen wäre.

Die vorstehende Beschreibung der erfindungsgemäßen Vorgehensweise macht deutlich, daß die mit dem Schlupf des Wandlers als Funktion von Ein- und Ausgangsdrehzahl verbundene Wandlerverstärkung im Hinblick auf ein einzustellendes Abtriebssollmoment bestimmt werden kann. Dadurch wird eine genaue Bestimmung des Sollmotormoments zur Erreichung des Sollabtriebmoments gewährleistet, so daß bei der Einstellung des Sollmotormoments über Kraftstoffzumessung, Zündung und/oder Drosselklappenstellung eine optimale Steuerung der Ausgangsleistung der Antriebseinheit ermöglicht wird.

## Patentansprüche

1. Einrichtung zur Steuerung der Ausgangsleistung einer Antriebseinheit (10, 20, 22, 28, 30, 32) eines Fahrzeugs,
welche aus einem Motor (10) und einer Kraftübertragungseinheit (20, 22, 28, 30, 32) mit wenigstens einem das Übersetzungsverhältnis zwischen Motor und Radantrieb beeinflussenden Element (22, 30) besteht;
wobei die Steuereinrichtungs aus einem Sollert (m_ab_soll) für das Abtriebsmoment dieser Antriebseinheit ein Sollwert (m_mot) für das Motormoment bestimmt,
mit Mitteln (12, 14, 18) zur Einstellung des Motormoments versehen ist, und aus dem Sollwert (m_ab_soll) für das Abtriebsmoment ein Sollwert (m_turb) für eine Betriebsgröße der Kraftübertragungseinheit ermittelt,
wobei der Sollwert (m_turb) dieser Betriebsgröße ein Maß für den Wert der Betriebsgröße der Kraftübertragungseinheit darstellt, der sich als Folge der Einstellung des Sollwertes (m_ab_soll) des Abtriebsmoments ergibt,
und der Sollwert (m_mot) für das Motormoment auf der Basis des aus dem Sollwert (m_ab_soll) für das Abtriebsmoment bestimmten Sollwert (m_turb) für die Betriebsgröße berechnet wird.

2. Einrichtung nach Anspruch 1, dadurch gekennzeichnet, daß das Element ein vorzugsweise elektronisch steuerbares Getriebe mit einem Wandler umfaßt.

3. Einrichtung nach einem der vorhergehenden Ansprüche, dadurch gekennzeichnet, daß bei der Berechnung des Motormomentsollwerts wenigstens die Verstärkung des Wandlers ausgewertet wird.

4. Einrichtung nach Anspruch 3, dadurch gekennzeichnet, daß diese Verstärkung auf der Basis einer die Abtriebsdrehzahl der Antriebseinheit repräsentierenden Größe, der Getriebeübersetzung und dem Sollwert des Abtriebsmomentes ermittelt wird, wobei der ermittelte Wert der Verstärkung entspricht, die bei Einstellung des Motormoments zu erwarten ist.

5. Einrichtung nach einem der vorhergehenden Ansprüche, dadurch gekennzeichnet, daß die Wandlerverstärkung mittels Interpolation aus einem Kennfeld ausgelesen wird.

6. Einrichtung nach einem der vorhergehenden Ansprüche, dadurch gekennzeichnet, daß der Sollwert für das Motormoment auf der Basis von Turbinensollmoment und Turbinendrehzahl des Wandlers bestimmt wird.

7. Einrichtung nach einem der vorhergehenden Ansprüche, dadurch gekennzeichnet, daß das Turbinensollmoment aus Abtriebssollmoment und Getriebeübersetzung ermittelt wird.

8. Einrichtung nach einem der vorhergehenden Ansprüche, dadurch gekennzeichnet, daß das Motormoment durch Eingriff in die Leistung des Motors, z.B. über die Steuerung der einzuspritzenden Kraftstoffmenge bei Diesel-, der Luftzufuhr und/oder ggf. des Zündzeitpunktes bei Diesel- oder Ottomotoren über wenigstens ein vorbestimmtes Kennfeld oder eine Tabelle erfolgt.

9. Einrichtung nach einem der vorhergehenden Ansprüche, dadurch gekennzeichnet, daß als Getriebeübersetzung das Drehzahlübersetzungsverhältnis oder die effektive Drehmomentübertragung des Getriebes Verwendung findet.

## Claims

1. Device for controlling the output power of a drive unit (10, 20, 22, 28, 30, 32) of a vehicle, which drive unit (10, 20, 22, 28, 30, 32) comprises an engine (10) and a power transmission unit (20, 22, 28, 30, 32) with at least one element (22, 30) which influences the transmission ratio between engine and wheel drive;
the control device determining a desired value (m_mot) for the engine torque from a desired value (m_ab_des) for the output torque of this drive unit,
being provided with means (12, 14, 18) for setting the engine torque, and identifying a desired value (m_turb) for an operation variable of the power transmission unit from the desired value (m_ab_des) for the output torque, the desired value (m_turb) of this operational variable constituting a measure of the value of the operational variable of the power transmission unit, which value results from the setting of the desired value (m_ab_des) of the output torque,
and the desired value (m_mot) for the engine torque being calculated on the basis of the desired value (m_turb) determined from the desired value (m_ab_des) for the output torque, for the operational variable.

2. Device according to Claim 1, characterized in that the element comprises a preferably electronically controllable gearbox with a converter.

3. Device according to one of the preceding claims, characterized in that when the desired engine torque value is calculated at least the boosting of the converter is evaluated.

4. The device according to Claim 3, characterized in that this boosting is identified on the basis of a variable which represents the output speed of the drive unit, the gear transmission ratio and the desired value of the output torque, the identified value corresponding to the degree of boosting which is to be expected when the engine torque is set.

5. Device according to one of the preceding claims, characterized in that the converter boosting is read out from a characteristic diagram by means of interpolation.

6. Device according to one of the preceding claims, characterized in that the desired value for the engine torque is determined on the basis of the desired turbine torque and the turbine speed of the converter.

7. Device according to one of the preceding claims, characterized in that the desired turbine torque is identified from the desired output torque and gear transmission ratio.

8. Device according to one of the preceding claims, characterized in that the engine torque is set by intervening in the power of the engine, for example via the control of the quantity of fuel to be injected in the case of the supply of diesel or air and/or, if appropriate, by controlling the ignition time in the case of diesel engines or spark ignition engines by means of at least one predetermined characteristic diagram or a table.

9. Device according to one of the preceding claims, characterized in that the rotational speed transmission ratio or the effective torque transmission ratio of the gearbox is used as gearbox transmission ratio.

## Revendications

1. Dispositif pour commander la puissance de sortie d'une unité motrice (10, 20, 22, 28, 30, 32) d'un véhicule, qui consiste en un moteur (10), et une unité de transmission d'énergie (20, 22, 28, 30, 32) avec au moins un élément (22, 30) qui influence le rapport de démultiplication entre le moteur et l'entraînement des roues,
le dispositif de commande déterminant à partir d'une valeur de consigne (m_ab_cons) du couple de l'arbre de sortie de cette unité motrice, une valeur de consigne (m_mot) du couple moteur,
étant pourvu de moyens (12, 14, 18) pour régler le couple moteur, et déterminant à partir de la valeur de consigne (m_ab_cons) du couple de l'arbre de sortie, une valeur de consigne (m_turb) pour une grandeur de fonctionnement de l'unité de transmission d'énergie,
la valeur de consigne (m_turb) de cette grandeur de fonctionnement représentant une mesure de la valeur de la grandeur de fonctionnement de l'unité de transmission d'énergie, mesure que l'on obtient comme conséquence du réglage de la valeur de consigne (m_ab_cons) du couple de l'arbre de sortie,
et la valeur de consigne (m_mot) du couple moteur étant calculée sur la base de la valeur de consigne (m_turb) de la grandeur de fonctionnement déterminée à partir de la valeur de consigne (m_ab_cons) du couple de l'arbre de sortie.

2. Dispositif selon la revendication 1, caractérisé en ce que l'élément comprend une boîte de vitesses qui de préférence peut être commandée de façon électronique, avec un convertisseur.

3. Dispositif selon l'une des revendications précédentes, caractérisé en ce que, lors du calcul de la valeur de consigne du couple moteur, on exploite au moins l'amplification du convertisseur.

4. Dispositif selon la revendication 3, caractérisé en ce que cette amplification est déterminée sur la base d'une grandeur représentant la vitesse de rotation de l'arbre de sortie de l'unité motrice, de la démultiplication de la boîte de vitesses et de la valeur de consigne du couple de l'arbre de sortie, valeur déterminée correspondant à l'amplification, à laquelle on doit s'attendre lors du réglage du couple moteur.

5. Dispositif selon l'une des revendications précédentes, caractérisé en ce que l'amplification du convertisseur est extraite au moyen d'une interpolation à partir d'un champ caractéristique.

6. Dispositif selon l'une des revendications précédentes, caractérisé en ce que la valeur de consigne du couple moteur est déterminée sur la base du couple de consigne de la turbine et de la vitesse de rotation de la turbine du convertisseur.

7. Dispositif selon l'une des revendications précédentes, caractérisé en ce que le couple de consigne de la turbine est déterminé à partir du couple de consigne de l'arbre de sortie et de la démultiplication de la boîte de vitesses.

8. Dispositif selon l'une des revendications précédentes, caractérisé en ce que le couple moteur est obtenu par une action sur la puissance du moteur, par exemple au moyen de la commande de la quantité de carburant à injecter dans le cas de moteurs Diesel, de l'arrivée d'air et/ou le cas échéant de l'instant d'allumage dans le cas de moteurs Diesel ou de moteurs à allumage par étincelle, au moyen d'au moins un champ caractéristique prédéterminé ou d'une table.

9. Dispositif selon l'une des revendications précédentes, caractérisé en ce que l'on utilise comme démultiplication de la boîte de vitesses, le rapport de démultiplication de la vitesse de rotation ou la transmission effective du couple de rotation de la boîte de vitesses.
